# EUROPÄISCHE PATENTSCHRIFT

(11) **EP 0 744 437 B1**
(45) Veröffentlichungstag und Bekanntmachung des Hinweises auf die Patenterteilung: **03.12.2003**
(21) Anmeldenummer: 96106332.8
(22) Anmeldetag: 23.04.1996
(51) Int. Cl.: C08K 5/54, C08L 21/00

(54) **Abmischungen aus Organosilanverbindungen und deren Verwendung**
Mixtures of organosilane compounds and their use
Mélanges de composés organosilanes et leur utilisation

(30) Priorität: 26.05.1995 DE 19519364
(43) Veröffentlichungstag der Anmeldung: 27.11.1996
(73) Patentinhaber: Degussa AG, 40474 Düsseldorf (DE)
(72) Erfinder: Deschler, Ulrich, Dr., 2930 Brasschaat (BE); Göbel, Thomas, Dr., 63457 Hanau (DE); Görl, Udo, Dr., 53332 Bornheim (DE); Lambertz, Horst, 50354 Hürth (DE)

(56) Entgegenhaltungen:
- EP-A- 0 519 188
- EP-A- 0 547 344
- DE-A- 4 308 311
- DATABASE WPI Section Ch, Week 9351 Derwent Publications Ltd., London, GB; Class A12, AN 93-408891 XP002013653 & JP-A-05 306 351 (SEKAICHO RUBBER KK) , 19.November 1993

## Beschreibung

Die Erfindung betrifft Abmischungen von Organosilanverbindungen, ihre Verwendung in vulkanisierbaren Kautschukmischungen und Formmassen und die zugehörigen Mischungen.

Es ist bekannt, Organosilane in Kombination mit hellen Füllstoffen, insbesondere aktiven, gefällten Kieselsäuren, in Kautschukmischungen einzusetzen (1) Durch partiellen oder auch vollständigen Austausch des Rußfüllstoffes gegen diese Kombination lassen sich insbesondere im Reifensektor heute nicht wegzudenkende Verbesserungen von Vulkanisateigenschaften erzielen. Zu nennen wäre hierbei die Entwicklung von reversionsstabilen Kautschukmischungen, die sich insbesondere bei schweren OTR-Reifen mit langen Heizzeiten als vorteilhaft erwiesen haben (2). Darüber hinaus führt vor allem der Einsatz von Kieselsäuren in Kombination mit Bis(triethoxysilylpropyl)tetrasulfan zur Reduzierung des Hitzeaufbaues von Reifen, insbesondere LKW-Reifen, unter Belastung (3). Die zur Zeit wichtigste und neueste Anwendung dieses Systems betrifft die Reduzierung des Rollwiderstandes (4) von Reifen durch den Austausch des Rußes mit dem Vorteil einer Benzineinsparung.

Viele Anmeldungen und Patente aus jüngerer Zeit haben diese besonders wichtige Eigenschaft, einhergehend mit einer Reduzierung des Schadstoffausstoßes, zum Thema. Zu nennen sind die Anmeldungen EP-A1 0447 066, EP-A1 0620 250 und US-PS 5,227,425.

Dort wird gezeigt, daß die Verwendung von Kieselsäure in Kombination mit Bis(triethoxysilylpropyl)tetrasulfan, anstelle von Ruß als Füllstoff, zu einer deutlichen Reduzierung des Rollwiderstandes und den ebenfalls wichtigen Reifeneigenschaften, wie Naßrutschfestigkeit und Abriebwiderstand, führt.
Es wurde nun gefunden, daß Abmischungen von Bis(trialkoxysilylalkylen)polysulfanen mit Alkyltrialkoxysilanen gegenüber der Verwendung von Bis(trialkoxysilylpropyl)polysulfan als alleiniger Organosilanverbindung zu synergistischen Effekten, insbesondere deutlichen Verbesserungen im Weiterreißwiderstand und Ermüdungsverhalten der Kautschukmischung bei ansonsten nahezu identischem Wertebild führen.

Gegenstand der Erfindung sind
Abmischungen bestehend aus Organosilanverbindungen gemäß den allgemeinen Formeln:

[(RO)₃Si(CH₂)₃Sₓ]₂ (I)

und

(R'O)₃Si(CH₂)_{y}-CH₃ (II)

in denen bedeuten:
- R =: Alkyl, geradkettig oder verzweigt mit 1-8 C-Atomen, bevorzugt mit 1-4 C-Atomen
- x =: 1-4, bevorzugt 1-3
- R' =: Alkyl, geradkettig oder verzweigt mit 1-8 C-Atomen, bevorzugt mit 1-4 C-Atomen
wobei
- R =: R' oder R ≠ R'sein kann
- y =: 1 - 19, bevorzugt 1-6
und der Anteil der Verbindung gemäß Formel (I) in der Abmischung 70 bis 95 Gew.-% und dementsprechend der Anteil des Silans gemäß Formel (II) 5 bis 30 Gew.-%, beträgt.

Besonders bevorzugt sind Abmischungen, die aus Bis(trialkoxysilylpropyl)tetrasulfan oder -disulfan und Trialkoxypropylsilan mit der Bedeutung CH₃O-, C₂H₅O- für den Alkoxyrest bestehen.

Anwendung finden diese Abmischungen im allgemeinen in vulkanisierbaren Formmassen und Kautschukmischungen, die gegebenenfalls in Kombination mit Ruß helle Füllstoffe enthalten, die im Kautschuksektor üblicherweise eingesetzt werden.

Dazu zählen oxidische und silikatische Füllstoffe auf natürlicher Basis, wie z. B. Clays und Kieselkreiden oder synthetische Füllstoffe wie durch Fällung gewonnene Kieselsäuren und Silikate.
Die synthetischen Füllstoffe werden erfindungsgemäß bevorzugt verwendet.

Entsprechend sind Mischungen der Organosilane (I) und (II) mit einem oder mehreren der genannten hellen Füllstoffe ein weiterer Gegenstand der Erfindung.
Diese enthalten 30 bis 95 Gew.-% an Füllstoff, bezogen auf die Gesamtmenge der Organosilanverbindungen.

Bevorzugt eingesetzt werden silikatische Füllstoffe und gefällte Kieselsäuren, die an ihrer Oberfläche reaktionsfähige Silanolgruppen aufweisen und eine spez. Oberfläche zwischen 1 und 200 m²/g (ISO 5794/1D) besitzen, insbesondere wenn die DBP-Zahl (ASTM D 2414) mit 150 bis 300 ml/100 g gemessen wird.
Die Reaktion zwischen Füllstoffoberfläche und den Alkoxygruppen der Organosilanverbindungen läuft bei entsprechender Temperatur während der Abmischung mit dem Füllstoff gänzlich oder zum Teil ab (US-PS 4,297,146, US-PS 5,116,886) oder aber auch erst bei der Herstellung der Formmassen bzw. Kautschukmischung, dann in jedem Fall vollständig.
Die Gesamtmenge der Organosilanverbindungen in der Formmasse bzw. Kautschukmischung beläuft sich auf 0,1 bis 20 Gew.-%, bezogen auf die Menge des hellen Füllstoffs. Wird also ein heller Füllstoff mit einem höheren Gewichtsanteil an Organosilanverbindungen eingemischt, ist der zu vulkanisierenden Mischung ein entsprechender Anteil an silikatischem Füllstoff oder Kieselsäure zuzusetzen, dessen Oberfläche dann mit den noch nicht umgesetzten Organosilanverbindungen abreagieren kann.

In vielen Fällen wird als zusätzlicher Füllstoff ein üblicherweise eingesetzter Ruß, gegebenenfalls auch in einer Abmischung mit den Organosilanverbindungen (I) und (II) eingesetzt. Dessen Menge beläuft sich auf 0 bis 150 Teile pro 100 Teile Polymer.

Der helle Füllstoff, insbesondere die gefällte Kieselsäure, wird in dieser Anwendung bevorzugt eingesetzt in einer Menge von 10 bis 250, bevorzugt 25 bis 80 Teilen, bezogen auf 100 Teile Polymer, gegebenenfalls unter Zusatz von 1 bis 20 Teilen Ruß.

Die Gesamtmenge an Füllstoffen sollte 250 Gew.-Teile nicht überschreiten.

Vorteilhaft ist es, den Füllstoff, sei es mit den Organosilanverbindungen (I) und (II) modifiziert oder nicht, in granulierter oder geperlter Form einzusetzen.

Erfindungsgemäß werden die neuen Abmischungen mit und ohne Füllstoffgehalt in vulkanisierbaren Formmassen und Kautschukmischungen verwendet.
Dabei handelt es sich um mit üblichen Beschleuniger und Schwefel vernetzbare natürliche und synthetische Elastomere, ölgestreckt oder nicht, als Einzelpolymer oder im Verschnitt mit anderen Kautschuken, wie z. B. Naturkautschuke, Butadienkautschuke, Isoprenkautschuke, Butadien-Styrol-Kautschuke, Butadien-Acrylnitril-Kautschuke, Butylkautschuke, Terpolymere aus Ethylen, Propylen und nicht konjugierte Diene. Ferner kommen für Kautschukgemische mit den genannten Kautschuken die folgenden zusätzlichen Kautschuke in Frage: Carboxylkautschuke, Epoxidkautschuke, Trans-Polypentenamer, halogenierte Butylkautschuke, Kautschuke aus 2-Chlor-Butadien, Ethylen-Vinylacetat-Copolymere, gegebenenfalls auch chemische Derivate des Naturkautschuks sowie modifizierte Naturkautschuke.
Bevorzugt verwendet wird ein nach dem Lösungspolymerisationsverfahren hergestellter SBR, im Gemisch mit anderen Dienkautschuken nicht unter 30 Teilen pro 100 Teilen des anderen Kautschuks.

Bestandteile der vulkanisierbaren Formmassen und Kautschukmischungen sind die üblichen Hilfsmittel, wie Weichmacher, Stabilisatoren, Aktivatoren, Pigmente, Alterungsschutzmittel und Verarbeitungshilfsmittel in den üblichen Dosierungen.
Die Mischungen werden mit den in der Gummiindustrie gebräuchlichen Mischaggregaten, wie Innenmischer und Walzwerk hergestelt.

Die erfindungsgemäßen Organosilanabmischungen finden Einsatz in allen Kautschukanwendungen, wie z. B. Reifen, Fördergurten, Dichtungen, Keilriemen, Schläuchen etc. und führen zu verbesserten Weiterreißwiderständen und Ermüdungsverhalten der Vulkanisate, auch wenn die Gesamtmenge der Abmischung nicht größer als die Tetrasulfanmenge in der Vergleichsmischung ist.
*(1) S. Wolff, "Silanes in Tire Compounding after ten Years, Review, Third Annual Meeting and Conference on Tire Science and Technology, The Tire Society, March 28-29, 1984, Akron, Ohio*/*USA*
*(2) S. Wolff, "Kautschuk und Gummi, Kunststoffe"* ***10*** *(1979), Sei te 760 ff, US-PS 4,517,336*
*(3) S. Wolff, R. Panenka "Present Possibilities to Reduce Heat Generation of Tire Compounds" Internatiol Rubber Conference* October 15-18, 1985, Kyoto/Japan
*(4) S. Wolff "The Influence of Fillers on Rolling Resistance" 129*^{*th*} *Meeting of the Rubber Division American Chemical Society, April 8-11, 1986, New York, n.J.*/*USA*

In den Beispielen verwendete Prüfnormen:

| Einheit | Norm |
|---|---|
| Zugfestigkeit MPa | DIN 53 504 |
| Modul 300 % MPa | DIN 53 504 |
| Weiterreißwiderstand N/mm | DIN 53 507 |
| Shore-A-Härte - | DIN 53 505 |
| DIN-Abrieb mm³ | DIN 53 516 |
| MTS - | DIN 53 513 |
| Rißwachstum (De Mattia) Kc | ASTM D 813 |

In den Anwendungsbeispielen werden folgende Chemikalien verwendet:
- First Latex Crepe: Naturkautschuk
- Si 69: Bis(triethoxysilylpropyl)tetrasulfan der Firma Degussa AG.
- Si 69/Si 203: Abmischung aus Bis(triethoxysilylpropyl)tetrasulfan und Triethoxypropylsilan (Mengenverhältnis).
- Ingraplast NS: Mineralölweichmacher
- Vulkanox BKF: phenolisches Alterungsschutzmittel der Firma Bayer AG.
- Vulkacit DM: Dibenzothiazyldisulfid, Beschleuniger der Firma Bayer AG.
- Hexa K: Hexamethylentetramin der Firma Degussa AG.
- P extra N: Dithiocarbamat, Beschleuniger der Firma Bayer AG.
- Buna VSL 1955 S 25: Styrolbutadienkautschuk auf Basis Lösungspolymerisation der Firma Bayer.
- Buna CB 24: Polybutadienkautschuk der Firma Bayer.
- Naftolen ZD: aromatischer Weichmacher der Firma Chemetal.
- Vulkanox 4020: verfärbendes Alterungsschutzmittel auf Basis Phenylendiamin der Firma Bayer AG.
- Protector G 35: Ozonschutzwachs der Firma Fuller.
- Vulkacit D: Diphenylguanidin, Beschleuniger der Firma Bayer AG.
- Vulkacit CZ: Benzothiazyl-2-cyclohexylsulfenamid, Beschleuniger der Firma Bayer AG.
- Cariflex: Styrol-Butadienkautschuk auf Basis Emulsionspolymerisation der Firma Exxon.
- Ultrasil VN 3 GR: gefällte Kieselsäure mit einer BET-Oberfläche von 175 m²/g der Firma Degussa AG
- Polywachs 6000: Kieselsäureaktivator
- Vulkacit Merkapto: 2-Merkaptobenzothiazol der Firma Bayer AG.

### Beispiel 1: Vergleich von Si 69 gegen Si 69/Si 203- bzw. Si 69/Si 216-Abmischungen in einer Mischung auf Basis NR

| | **1** | **2** | **3** | **4** | **5** |
|---|---|---|---|---|---|
| **Rezeptur** | | | | | |
| | | | | | |
| First Latex Crepe | 100 | 100 | 100 | 100 | 100 |
| Ultrasil VN 3 GR | 50 | 50 | 50 | 50 | 50 |
| ZnO aktiv | 2 | 2 | 2 | 2 | 2 |
| Benzoesäure | 0,8 | 0,8 | 0,8 | 0,8 | 0,8 |
| Si 69 | 3 | - | - | - | - |
| Si 69/Si 203 90:10 | - | 3 | - | - | - |
| Si 69/Si 203 80:20 | - | - | 3 | - | - |
| Si 69/Si 203 70:30 | - | - | - | 3 | - |
| Si 69/Si 216 90:10 | - | - | - | - | 3 |
| Ingraplast NS | 3 | 3 | 3 | 3 | 3 |
| Vulkanox BKF | 1 | 1 | 1 | 1 | 1 |
| DEG | 1 | 1 | 1 | 1 | 1 |
| | | | | | |
| Vulkacit DM | 0,8 | 0,8 | 0,8 | 0,8 | 0,8 |
| Hexa K | 1,6 | 1,6 | 1,6 | 1,6 | 1,6 |
| P extra N | 0,3 | 0,3 | 0,3 | 0,3 | 0,3 |
| Schwefel | 2,8 | 2,8 | 2,8 | 2,8 | 2,8 |
| | | | | | |

| **Vulkanisatdaten: 145 °C/t**_{**95%**} | | | | | |
|---|---|---|---|---|---|
| | | | | | |
| Zugfestigkeit [MPa] | 24,8 | 25,4 | 24,7 | 24,9 | 25,0 |
| Modul 300 % [MPa] | 9,3 | 8,8 | 9,1 | 9,0 | 9,3 |
| Weiterreißwiderstand [N/mm] | 30 | 42 | 41 | 37 | 38 |
| Shore-A-Härte | 76 | 76 | 78 | 77 | 77 |
| DIN-Abrieb [mm³] | 153 | 153 | 148 | 153 | 157 |
| | | | | | |

| **Ermüdungsverhalten De Mattia** | | | | | |
|---|---|---|---|---|---|
| | | | | | |
| 2 mm - 4 mm [kc] | 1,3 | 2,2 | 1,4 | 1,4 | 1,5 |
| 4 mm - 8 mm [kc] | 7,8 | 19,6 | 13,2 | 14,7 | 13,8 |
| 8 mm - 12 mm [kc] | 20,5 | 63,7 | 43,4 | 51,9 | 44,8 |

Die erfindungsgemäßen Verbindungen zeigen gegenüber reinem Si 69 deutliche Verbesserungen im Weiterreißwiderstand und im Ermüdungsverhalten (Rißwachstum) bei sonst annähernd gleichem Wertebild.

### Beispiel 2: Vergleich von Si 69 gegen Si 69/Si 203-Abmischungen in L-SBR/BR PKW-Lauffläche

| | **1** | **2** | **3** |
|---|---|---|---|
| **Rezeptur** | | | |
| | | | |
| Buna VSL 1955 S 25 | 96 | 96 | 96 |
| Buna CB 24 | 30 | 30 | 30 |
| Ultrasil VN 3 GR | 80 | 80 | 80 |
| Si 69 | 6,4 | - | - |
| Si 69/Si 203 90:10 | - | 6,4 | - |
| Si 69/Si 203 80:20 | - | - | 6,4 |
| ZnO RS | 3 | 3 | 3 |
| Stearinsäure | 2 | 2 | 2 |
| Naftolen ZD | 15 | 15 | 15 |
| Vulkanox 4020 | 1,5 | 1,5 | 1,5 |
| Protector G 35 | 1 | 1 | 1 |
| | | | |
| Vulkacit D | 2 | 2 | 2 |
| Vulkacit CZ | 1,7 | 1,7 | 1,7 |
| Schwefel | 1,4 | 1,4 | 1,4 |
| | | | |
| | | | |

| **Vulkanisatdaten: 165 °C/t** _{**95%**} | | | |
|---|---|---|---|
| | | | |
| Zugfestigkeit [MPa] | 14,4 | 14,1 | 14,8 |
| Modul 300 % [MPa] | 8,4 | 8,2 | 8,0 |
| Weiterreißwiderstand [N/mm] | 16 | 21 | 19 |
| DIN-Abrieb [mm³] | 78 | 77 | 77 |
| | | | |

| **De Mattia (Rißwachstum)** | | | |
|---|---|---|---|
| | | | |
| 2 mm - 4 mm [kc] | 0,3 | 0,3 | 0,8 |
| 4 mm - 8 mm [kc] | 1,3 | 1,9 | 2,5 |
| 8 mm - 12 mm [kc] | 2,8 | 4,9 | 5,1 |
| | | | |

| **MTS-Prüfung** | | | |
|---|---|---|---|
| | | | |
| tan δ 0 °C | 0,490 | 0,482 | 0,494 |
| tan δ 60 °C | 0,139 | 0,138 | 0,143 |

Wie im Beispiel 1, zeigen die erfindungsgemäßen Verbindungen gegenüber reinem Si 69 deutlich bessere Werte im Weiterreißwiderstand und im De Mattia Rißwachstumverhalten bei sonst weitgehend gleichem Wertebild.

### Beispiel 3: Vergleich von Si 69 gegen Si 69/Si 203-Abmischungen in E-SBR

| | **1** | **2** | **3** |
|---|---|---|---|
| **Rezeptur** | | | |
| | | | |
| Cariflex 1509 | 100 | 100 | 100 |
| Ultrasil VN 3 GR | 50 | 50 | 50 |
| ZnO RS | 3 | 3 | 3 |
| Stearinsäure | 2 | 2 | 2 |
| Si 69 | 3 | - | - |
| Si 69/Si 203 90:10 | - | 3 | - |
| Si 69/Si 203 80:20 | - | - | 3 |
| Polywachs 6000 | 1,5 | 1,5 | 1,5 |
| | | | |
| Vulkacit DM | 1,2 | 1,2 | 1,2 |
| Vulkacit Merkapto | 0,7 | 0,7 | 0,7 |
| Schwefel | 2,0 | 2,0 | 2,0 |
| | | | |
| | | | |

| **Vulkanisatdaten: 155 °C/t** _{**95%**} | | | |
|---|---|---|---|
| | | | |
| Zugfestigkeit [MPa] | 16,4 | 16,2 | 15,7 |
| Modul 300 % [MPa] | 11,3 | 10,9 | 10,3 |
| Weiterreißwiderstand [N/mm] | 8 | 12 | 14 |
| Shore-A-Härte | 75 | 74 | 73 |
| DIN-Abrieb [mm³] | 112 | 108 | 110 |
| | | | |

| **De Mattia (Rißwachstum)** | | | |
|---|---|---|---|
| | | | |
| 2 mm - 4 mm [kc] | 0,1 | 0,1 | 0,2 |
| 4 mm - 8 mm [kc] | 0,6 | 0,8 | 1,3 |
| 8 mm - 12 mm [kc] | 2,0 | 3,0 | 3,8 |

Wie in den vorangegangenen Beispielen, zeigen die erfindungsgemäßen Verbindungen gegenüber reinem Si 69 deutliche Vorteile im De Mattia und Weiterreißwiderstand.

## Patentansprüche

1. Abmischungen bestehend aus Organosilanverbindungen gemäß den allgemeinen Formeln
[(RO)₃Si(CH₂)₃Sₓ]₂ (I)
und
(R'O)₃Si(CH₂)_{y}-CH₃ (II)
in denen bedeuten:
R = Alkyl, geradkettig oder verzweigt mit 1 - 8 C-Atomen
x = 1 - 4
R' = Alkyl, geradkettig oder verzweigt mit 1 - 8 C-Atomen
wobei
R = R' oder R ≠ R'
y = 1 - 19
und der Anteil der Verbindung gemäß Formel(I) in der Abmischung 70 bis 95 Gew.-% und dementsprechend der Anteil des Silans gemäß Formel (II) 5 bis 30 Gew.-% beträgt.

2. Abmischungen gemäß Anspruch 1,
**dadurch gekennzeichnet, daß** sie zusätzlich einen silikatischen oder oxidischen Füllstoff in einer Menge von 30 bis 95 Gew.-% enthalten, bezogen auf die Gesamtmenge der Organosilanverbindungen.

3. Abmischungen gemäß Anspruch 2,
**dadurch gekennzeichnet, daß** der silikatische Füllstoff eine gefällte Kieselsäure mit einer spez. Oberfläche zwischen 1 und 200 m²/g (ISO 5794/D) ist.

4. Abmi schungen gemäß Anspruch 3,
**dadurch gekennzeichnet, daß** die Kieselsäure eine als DBP-Zahl (ASTM D 2414) gemessene Struktur von 150 bis 300 ml/100 g besitzt

5. Abmischungen gemäß Anspruch 1,
**dadurch gekennzeichnet, daß** sie zusätzlich Ruß in einer Menge von 30 bis 95 Gew.-% enthalten, bezogen auf die Gesamtmenge der Organosilanverbindungen.

6. Abmischungen gemäß den Ansprüchen 2 bis 5,
**dadurch gekennzeichnet, daß** die Füllstoffe bzw. der Ruß zumindest zum Teil an der Oberfläche mit den Organosilanverbindungen (I) und (II) umgesetzt vorliegen.

7. Verwendung der Abmischungen gemäß den Ansprüchen 1 bis 6 in vulkanisierbaren Formmassen und Kautschukmischungen.

8. Verwendung der Abmischungen gemäß Anspruch 7 in vulkanisierbaren Kautschuk-Mischungen auf der Basis von Lösungs-SBR.

9. Verwendung der Abmischungen gemäß Anspruch 7 in vulkanisierbaren Kautschuk-Mischungen auf der Basis von Emulsions-SBR.

10. Vulkanisierbare Formmassen und Kautschukmischungen, enthaltend 10 bis 250 eines silikatischen Füllstoffs und 0 bis 150 Teile Ruß, bezogen auf 100 Teile Polymer, und 0,1 bis 20 Teile Organosilanverbindungen, bezogen auf 100 Teile des silikatischen Füllstoffs,
**dadurch gekennzeichnet, daß** sie Abmischungen gemäß Anspruch 1 enthalten.

11. Vulkanisierbare Formmassen und Kautschukmischungen gemäß Anspruch 10,
**dadurch gekennzeichnet, daß** sie Abmischungen, wie in den Ansprüchen 2 bis 6 beschrieben, enthalten.

## Claims

1. Blends consisting of organosilane compounds in accordance with the general formulae
[(RO)₃Si(CH₂)₃Sₓ]₂ (I)
and
(R'O)₃Si(CH₂)_{y}-CH₃ (II)
in which
R represents an alkyl group, straight chain or branched, with 1-8 carbon atoms,
x represents 1-4,
R' represents an alkyl group, straight chain or branched, with 1-8 carbon atoms,
wherein R and R' may be identical or different,
y represents 1-19
and the proportion of the compound of formula (I) in the blend is 70 to 95 wt.%, and accordingly the proportion of the silane of formula (II) is 5 to 30 wt.%.

2. Blends according to Claim 1,
**characterised in that** they also contain a silicate or oxide filler in an amount of 30 to 95 wt.%, with respect to the total amount of organosilane compounds.

3. Blends according to Claim 2,
**characterised in that** the silicate filler is a precipitated silica with a specific surface area between 1 and 200 m²/g (ISO 5794/D) .

4. Blends according to Claim 3,
**characterised in that** the silica has a structure of 150 to 300 ml/100 g determined as the DBP index (ASTM D 2414).

5. Blends according to Claim 1,
**characterised in that** they also contain carbon black in an amount of 30 to 95 wt.%, with respect to the total amount of organosilane compounds.

6. Blends according to Claims 2 to 5,
**characterised in that** the fillers or the carbon black has/have at least partly reacted at the surface with organosilane compounds (I) and (II).

7. Use of blends according to Claims 1 to 6 in vulcanisable moulding compositions and rubber mixtures.

8. Use of blends according to Claim 7 in vulcanisable rubber mixtures based on solution-SBR.

9. Use of blends according to Claim 7 in vulcanisable rubber mixtures based on emulsion-SBR.

10. Vulcanisable moulding compositions and rubber mixtures, containing 10 to 250 parts of a silicate filler and 0 to 150 parts of carbon black, with respect to 100 parts of polymer; and 0.1 to 20 parts of organosilane compounds, with respect to 100 parts of silicate filler, **characterised in that** they contain blends according to Claim 1.

11. Vulcanisable moulding compositions and rubber mixtures according to Claim 10,
**characterised in that** they contain blends as described in Claims 2 to 6.

## Revendications

1. Mélanges constitués de composés d'organosilanes selon les formules générales
[(RO)₃Si(CH₂)₃Sₓ]₂ (I)
et
(R'O)₃Si(CH₂)_{y}-CH₃ (II)
dans lesquelles
R représente un alkyle à chaîne droite ou ramifiée, comportant de 1 à 8 atomes de carbone, de préférence de 1 à 4 atomes de carbone,
x vaut de 1 à 4, de préférence de 1 à 3,
R' représente un alkyle, à chaine droite ou ramifiée, comportant de 1 à 8 atomes de carbone, de préférence comportant de 1 à 4 atomes de carbone,
où R peut être identique à R' ou R peut être différent de R',
y vaut de 1 à 19,
et la proportion des composés selon la formule (I) dans le mélange s'élève à 70 à 95 % en poids, et de façon correspondante, la proportion du silane selon la formule (II) s'élève à 5 à 30 % en poids.

2. Mélanges selon la revendication 1,
**caractérisé en ce qu'**
ils contiennent en outre une charge comportant un silicate ou un oxyde en une quantité de 30 à 95 % en poids, par rapport à la quantité totale des composés d'organosilane.

3. Mélanges selon la revendication 2,
**caractérisés en ce que**
la charge silicatée est un acide silicique précipité ayant une surface spécifique comprise entre 1 et 200 m²/g (ISO 5794/D).

4. Mélanges selon la revendication 3,
**caractérisés en ce que**
l'acide silicique présente une structure mesurée selon l'indice DBP (ASTM S 2414) de 150 à 300 ml/100 g.

5. Mélanges selon la revendication 1,
**caractérisés en ce qu'**
ils contiennent en outre du noir de fumée en une quantité de 30 à 95 % en poids, par rapport à la quantité totale des composés d'organosilane.

6. Mélanges selon les revendications 2 à 5,
**caractérisés en ce que**
les charges ou selon les cas le noir de fumée se présentent au moins en partie à la surface sous une forme ayant réagi avec les composés d'organosilane (I) et (II).

7. Utilisation des mélanges selon les revendications 1 à 6 dans des masses à mouler et mélanges de caoutchoucs vulcanisables.

8. Utilisation des mélanges selon la revendication 7 dans des mélanges de caoutchouc vulcanisables à base de solutions de SBR.

9. Utilisation des mélanges selon la revendication 7 dans des mélanges de caoutchouc vulcanisables à base d'émulsions de SBR.

10. Masses à mouler vulcanisables et mélanges de caoutchouc vulcanisables, contenant de 10 à 250 parties d'une charge silicatée et de 0 à 150 parties de noir de fumée, par rapport à 100 parties du polymère, et de 0,1 à 20 parties de composés d'organosilane, par rapport à 100 parties de la charge silicatée,
**caractérisées en ce qu'**
ils contiennent des mélanges selon la revendication 1.

11. Masses à mouler et mélanges de caoutchouc vulcanisables selon la revendication 10,
**caractérisés en ce qu'**ils contiennent des mélanges tels que décrits dans les revendications 2 à 6.
